# EUROPÄISCHE PATENTSCHRIFT

(11) **EP 1 703 112 B1**
(45) Veröffentlichungstag und Bekanntmachung des Hinweises auf die Patenterteilung: **21.07.2010**
(21) Anmeldenummer: 05101343.1
(22) Anmeldetag: 22.02.2005
(51) Int. Cl.: F02D 41/40, F02D 41/02, F02D 41/30

(54) **Verfahren zum Aufheizen eines Katalysators einer Brennkraft-maschine**
Method for heating a catalyst of an internal combustion engine
Procédé de chauffage d'un catalyseur d'un moteur à combustion interne

(43) Veröffentlichungstag der Anmeldung: 20.09.2006
(73) Patentinhaber: Ford Global Technologies, LLC, Dearborn, MI 48126 (US)
(72) Erfinder: Borrmann, Dirk, 50354, Huerth (DE); Peirce, Gary, CM1 4UT, Chelmsford (GB); Eves, Brian, SS16 5JR, Basildon (GB); Brinkmann, Franz, 50354 Hürth (DE)
(74) Vertreter: Drömer, Hans-Carsten

(56) Entgegenhaltungen:
- EP-A- 1 108 873
- EP-A- 1 484 491
- WO-A-99/42718

## Beschreibung

Die Erfindung betrifft ein Verfahren zur Unterstützung des Aufheizens eines Katalysators, welcher im Abgasweg einer Brennkraftmaschine mit Direkteinspritzung und Fremdzündung angeordnet ist, wobei eine erste Kraftstoffinjektion vor dem oberen Totpunkt und eine zweite Kraftstoffinjektion im Verbrennungstakt nach dem oberen Totpunkt erfolgt. Ferner betrifft die Erfindung eine zur Durchführung des Verfahrens eingerichtete Brennkraftmaschine.

Ein Großteil der Emissionen einer Brennkraftmaschine entsteht, wenn während eines Kaltstarts der Katalysator noch nicht seine Betriebstemperatur erreicht hat. Um die zunehmend strengeren Emissionsvorschriften für Kraftfahrzeuge erfüllen zu können, ist daher eine möglichst schnelle Erwärmung eines Katalysators wünschenswert.

Diesbezüglich offenbart die EP 1 108 873 B1 ein Verfahren zur Aufheizung eines Katalysators, der im Abgasweg einer Brennkraftmaschine mit Direkteinspritzung und Funkenzündung angeordnet ist, wobei eine erste Kraftstoffinjektion im Kompressionstakt vor dem oberen Totpunkt des jeweiligen Kolbens erfolgt, das gebildete Luft-Kraftstoff-Gemisch fremdgezündet wird, und eine zweite Nachinjektion von Kraftstoff zwischen ca. 25° und 100° nach dem oberen Totpunkt durchgeführt wird. Ferner wird durch die Nachinjektion das zunächst noch magere Luft-Kraftstoff-Gemisch auf stöchiometrische bzw. fette (angereicherte) Werte gebracht.

Vor diesem Hintergrund war es Aufgabe der vorliegenden Erfindung, ein verbessertes Verfahren zur Unterstützung des Aufheizens eines Katalysators bei einer Brennkraftmaschine mit Direkteinspritzung und Funkenzündung bereitzustellen.

Diese Aufgabe wird durch ein Verfahren mit den Merkmalen des Anspruchs 1 sowie durch eine Brennkraftmaschine mit den Merkmalen des Anspruchs 9 gelöst.

Vorteilhafte Ausgestaltungen sind in den Unteransprüchen beschrieben.

Das erfindungsgemäße Verfahren kann insbesondere zum Aufheizen eines Katalysators eingesetzt werden, welcher im Abgasweg einer Brennkraftmaschine mit Direkteinspritzung und Funkenzündung angeordnet ist. Ein derartiges Aufheizen ist beispielsweise während eines Kaltstarts des Motors erforderlich, um möglichst schnell die Betriebstemperatur des Katalysators und damit die Beseitigung von schädlichen Emissionen aus den Abgasen zu erreichen. Bei dem Verfahren wird die Injektion des Kraftstoffes in die jeweiligen Brennkammern der Brennkraftmaschine in mindestens zwei einzelne Injektionen aufgeteilt, wobei eine erste Kraftstoffinjektion erfolgt, bevor der Kolben am Ende des Kompressionstakts den oberen Totpunkt erreicht. Des Weiteren erfolgt eine zweite Kraftstoffinjektion, nachdem der Kolben den oberen Totpunkt überschritten hat und sich somit im Verbrennungstakt (auch Expansions- oder Arbeitstakt genannt) befindet. Die zweite Kraftstoffinjektion soll dabei erfindungsgemäß vor der Entflammung des Kraftstoffes beginnen.

Es zeigt sich, daß mit dem vorgeschlagenen Verfahren bei hoher Kraftstoffausnutzung eine sehr starke Verzögerung der Verbrennung des Kraftstoffes erreicht werden kann, was wiederum zu einer entsprechenden Erhöhung der Abgastemperatur und damit einer raschen Erwärmung des Katalysators führt. Die vor der Kraftstoffzündung begonnene zweite Kraftstoffinjektion erzeugt dabei im Verbrennungstakt einen Bereich innerhalb der Brennkammer mit einem angereicherten Luft-Kraftstoff-Gemisch, welches leicht zündet und die Verbrennung rasch in die übrigen Bereiche der Brennkammer weiterleitet, in denen sich das typischerweise magere Luft-Kraftstoff-Gemisch aus dem ersten Injektionsvorgang befindet. Es zeigt sich, daß diese Wirkung vorteilhafterweise im Wesentlichen unabhängig von der Ausbildung der Brennkammer eintritt. So kann beispielsweise der Zylinderkopf in herkömmlicher Weise ausgebildet sein und die Kolbenoberseite flach, muldenförmig vertieft oder dachförmig erhöht sein. Entsprechend kann der Transport des Kraftstoffes vom Kraftstoffinjektor zur Zündkerze durch eines der bzw. eine Kombination der hierfür bekannten Verfahren erfolgen, d. h. unter Führung durch die Wände der Brennkammer ("wandgeführt"), durch Turbulenzen innerhalb der Brennkammer ("luftgeführt") oder durch die Form und Richtung des Kraftstoffstrahles ("strahlgeführt").

Die erste Kraftstoffinjektion findet vorzugsweise bereits im Einlaßtakt des zugehörigen Kolbens statt, d.h. wenn dieser sich vom (vorangehenden) oberen Totpunkt zum unteren Totpunkt bewegt und dabei durch das geöffnete Einlaßventil Frischluft ansaugt. Durch das Einströmen der Luft kommt es zu einer starken Wirbelbildung, die zu einer guten Verteilung des Kraftstoffes der ersten Injektion führt.

Die Menge des Kraftstoffes ist bei der ersten Injektion vorzugsweise so bemessen, daß sie zur Bildung eines mageren Luft-Kraftstoff-Gemisches in der betreffenden Brennkammer führt. Bei einem solchen mageren Gemisch ist die Gefahr einer Selbstzündung ausgeschlossen bzw. minimiert. Die erste Kraftstoffinjektion kann vorzugsweise zwischen 50 % und 80 % der insgesamt im entsprechenden Arbeitstakt des jeweiligen Kolbens injizierten Kraftstoffmenge umfassen.

Bei einer bevorzugten Ausführungsform des Verfahrens erfolgt die Zündung des Kraftstoffes zwischen ca. 10° und 40°, vorzugsweise zwischen ca. 25° und 30° nach dem oberen Totpunkt des Kolbens im Verbrennungstakt. Durch eine dermaßen stark verzögerte Zündung wird erreicht, daß die Abgase der Verbrennung eine hohe Temperatur haben, wobei die im Abgas enthaltene Wärmemenge etwa proportional zum Grad der Zündverzögerung ist.

Bei einer anderen vorteilhaften Ausführungsform des Verfahrens beginnt die zweite Kraftstoffinjektion zwischen 0° und ca. 40°, vorzugsweise zwischen 0° und ca. 25° nach dem oberen Totpunkt des entsprechenden Kolbens im Verbrennungstakt. Optional kann die zweite Injektion auch in den genannten Winkelbereichen wieder enden.

Gemäß einer Weiterbildung des Verfahrens erstreckt sich die zweite Kraftstoffinjektion über den Zeitpunkt der Zündung des Luft-Kraftstoff-Gemisches hinaus.

Vorteilhafterweise ist die Zusammensetzung des Luft-Kraftstoff-Gemisches über einen Arbeitstakt eines Kolbens gesehen im (zeitlichen und - innerhalb der Brennkammer - räumlichen) Mittel mager, um eine möglichst gute Kraftstoffausnutzung zu erzielen.

Die Erfindung betrifft ferner eine Brennkraftmaschine mit einem im Abgasweg angeordneten Katalysator. Die Brennkraftmaschine hat mindestens einen Zylinder, welcher einen Kolben, einen Kraftstoffinjektor zur Direktinjektion von Kraftstoff, und eine Zündeinrichtung zur Funkenzündung des Kraftstoffes aufweist. Ein Motorregler ist mit dem Kraftstoffinjektor und der Zündeinrichtung sowie gegebenenfalls weiteren Aktuatoren und/oder geeigneten Sensoren verbunden, um die Zeitpunkte und anteiligen Mengen von Kraftstoffinjektionen sowie die Zeitpunkte der Zündung zu steuern. Der Motorregler ist dadurch gekennzeichnet, daß er zur Durchführung eines Verfahrens der oben erläuterten Art eingerichtet ist. Das heißt, daß der Motorregler den Kraftstoffinjektor so ansteuern kann, daß eine erste Kraftstoffinjektion vor dem oberen Totpunkt des betreffenden Kolbens erfolgt und eine zweite Kraftstoffinjektion im Verbrennungstakt nach dem oberen Totpunkt sowie vor der Entflammung des Kraftstoffes beginnt. Hinsichtlich der Einzelheiten, Weiterbildungen und Vorteile der genannten Brennkraftmaschine wird auf die obige Beschreibung des entsprechenden Verfahrens verwiesen.

Bei einer bevorzugten Ausführungsform der Brennkraftmaschine enthält diese mindestens einen an eine ihrer Brennkammern gekoppelten Drucksensor zur Messung des Verbrennungsdruckes in dieser Brennkammer. Der Motorregler ist in diesem Falle vorzugsweise dazu eingerichtet, die zweite Kraftstoffinjektion zu beenden, wenn der gemessene Druck in der Brennkammer einen vorgegebenen Schwellwert überschreitet. Der genannte Schwellwert entspricht dabei typischerweise dem Kraftstoffinjektionsdruck, den der Kraftstoffinjektor bereitstellt bzw. maximal bereitstellen kann, abzüglich einer Sicherheitsgrenze für eventuelle Toleranzen.

Im Folgenden wird die Erfindung anhand der Figuren beispielhaft näher erläutert.

Es zeigen:
- Figur 1: schematisch einen Schnitt durch den Zylinder einer Brennkraftmaschine mit einer erfindungsgemäßen Motorregelung, und
- Figur 2: die zeitliche Lage der Kraftstoffinjektionen und des Zündzeitpunktes in Abhängigkeit vom Kurbelwellenwinkel α.

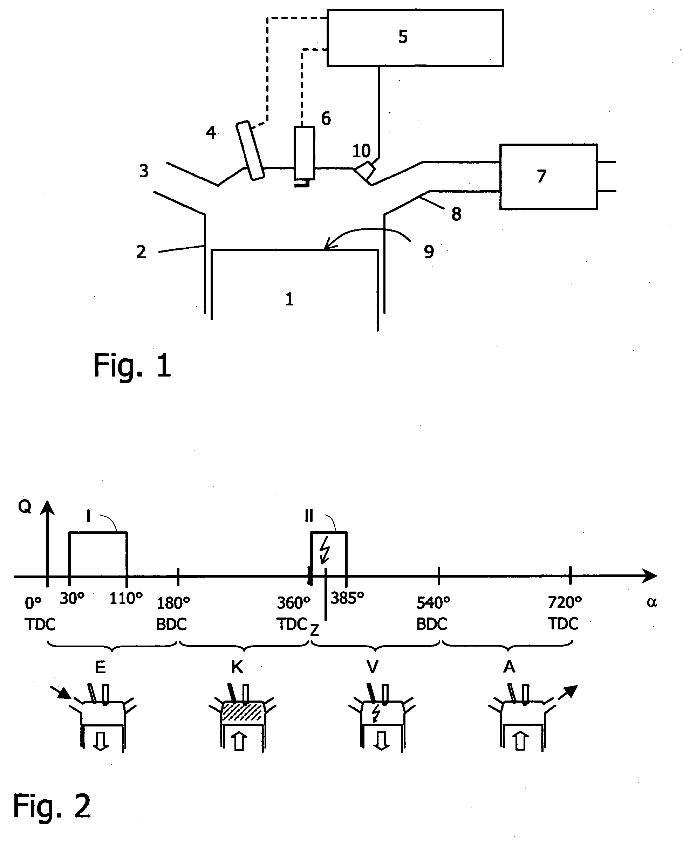

In Figur 1 ist schematisch ein Schnitt durch einen von mehreren Zylindern 2 einer Brennkraftmaschine dargestellt. In dem Zylinder 2 ist ein auf und ab beweglicher Kolben 1 mit einer im Wesentlichen flachen Oberseite 9 angeordnet. Alternativ könnte die Kolbenoberseite auch muldenförmig vertieft oder dachartig erhöht ausgebildet sein. Der dachförmig ausgebildete Zylinderkopf weist einen Einlaß 3 für Luft, einen Auslaß 8 für Abgas sowie einen Kraftstoffinjektor 4 und eine Zündkerze 6 auf. Typischerweise sind je zwei Einlaß- und zwei Auslaßventile (nicht dargestellt) vorgesehen, und die Zündkerze 6 ist im Wesentlichen mittig angeordnet. Ein Motorregler 5 ist mit dem Kraftstoffinjektor 4 und der Zündeinrichtung 6 gekoppelt, um den Zündzeitpunkt sowie die Zeitpunkte und Mengen der Kraftstoffinjektionen zu steuern. Der Motorregler 5 erhält Signale von einem Drucksensor 10, welcher zur Messung des Verbrennungsdruckes an die Brennkammer angekoppelt ist.

Des Weiteren ist in Figur 1 ein im Abgasweg 8 angeordneter Katalysator 7 dargestellt. Beim Kaltstart des Motors ist es wichtig, daß der Katalysator 7 möglichst schnell seine Betriebstemperatur erreicht, damit er Schadstoffe aus dem Abgas entfernen kann. Durch eine Verzögerung des Zündzeitpunktes des Luft-Kraftstoff-Gemisches im Zylinder 2 während des Kaltstarts wird in diesem Zusammenhang eine erhöhte Abgastemperatur und damit eine schnellere Aufheizung des Katalysators 7 angestrebt, wobei die dem Katalysator 7 zugeführte Wärme im Wesentlichen proportional zur eingestellten Zündverzögerung ist. Die Zündverzögerung darf jedoch nicht so groß sein, daß hierdurch die Stabilität des Motorlaufs beeinträchtigt würde. Bei Brennkraftmaschinen mit einer Injektion im Ansaugkrümmer (PFI: port fuel injection) ist diesbezüglich eine Zündung bei ca. 10° bis 15° nach dem oberen Totpunkt des Kolbens erreichbar. Bei Brennkraftmaschinen mit Direktinjektion und Funkenzündung (DISI: direct injection spark ignition) und mit einer Mulde im Kolben zur Lenkung des Kraftstoffes zur Zündeinrichtung ist durch mehrfache Kraftstoffinjektionen ein stabiler Betrieb bis ca. 25° bis 30° nach dem oberen Totpunkt möglich, wobei in der Regel zwei Injektionen erfolgen, von denen die erste im Einlaßtakt stattfindet und zwischen 50 und 80 % der gesamten Kraftstoffmenge enthält, und wobei die restliche Kraftstoffmenge zwischen ca. 60° und 20° vor dem oberen Totpunkt im Kompressionstakt injiziert wird. Der Kraftstoff der zweiten Injektion kann je nach Ausbildung der Brennkammer auf verschiedene Weisen zur Zündkerze geführt werden, beispielsweise wandgeführt, luftgeführt oder strahlgeführt. In jedem Falle entsteht ein angereicherter Kern einer Luft-Kraftstoff-Mischung, welcher leicht entzündet werden kann und die Verbrennung dann in die umgebende magere Mischung in der Brennkammer trägt. Da die anfänglich fette Verbrennung schneller verläuft als die Verbrennung einer herkömmlichen 5%-igen Magermischung, können größere Zündverzögerungen ohne Nachteile bezüglich der Kraftstoffökonomie erreicht werden.

Als Verbesserung des vorstehend beschriebenen Verfahrens wird vorliegend vorgeschlagen, die zweite Kraftstoffinjektion nach dem oberen Totpunkt des jeweiligen Kolbens durchzuführen. Figur 2 zeigt diesbezüglich in einem schematischen Diagramm den Ablauf der Kraftstoffinjektionen (vertikale Achse: Kraftstoff-Flußrate Q) über dem zeitlich fortlaufend gemessenen Kurbelwellenwinkel α. Dargestellt ist dabei ein kompletter Zyklus eines Kolbens, welcher mit einem Einlaßtakt E beginnt, in dem sich der Kolben vom oberen Totpunkt TDC zum unteren Totpunkt BDC bewegt und dabei Frischluft durch das geöffnete Einlaßventil in die Brennkammer einsaugt. Im anschließenden Kompressionstakt K bewegt sich der Kolben vom unteren To tpunkt BDC zum oberen Totpunkt TDC und komprimiert bei geschlossenen Ventilen die Gasmischung in der Brennkammer. Im anschließenden Verbrennungstakt V bewegt sich der Kolben vom oberen Totpunkt TDC zum unteren Totpunkt BDC zurück, wobei das Gasgemisch in der Brennkammer zu einem Zeitpunkt Z durch die Zündkerze gezündet wird. Im abschließenden Ausstoßtakt A bewegt sich der Kolben wieder vom unteren Totpunkt BDC zum oberen Totpunkt TDC und stößt dabei die verbrannten Abgase durch das geöffnete Auslaßventil in den Abgasweg.

Bei der in Figur 2 dargestellten Ausführungsform des Verfahrens findet eine erste Kraftstoffinjektion I im Einlaßtakt E statt, z. B. zwischen ca. 30° und ca. 110° nach dem oberen Totpunkt TDC. Die Menge der ersten Kraftstoffinjektion I ist dabei so bemessen, daß das resultierende Luft-Kraftstoff-Gemisch in der Brennkammer mager ist.

Nachdem der Kolben am Ende des Kompressionstaktes K den oberen Totpunkt TDC überschritten hat, erfolgt eine zweite Kraftstoffinjektion II, welche sich beispielsweise von ca. 0° bis ca. 25° nach dem oberen Totpunkt TDC erstrecken kann. Vorzugsweise erstreckt sich diese zweite Kraftstoffinjektion II über den Zeitpunkt Z der Zündung durch die Zündkerze hinaus.

Die Regelung der Einspritzdauer kann auch mit Hilfe des Druckanstiegs, der durch die beginnende Verbrennung erzeugt wird, innerhalb des Zylinders bestimmt werden. Damit der Motorregler 5 diesen Druckanstieg erkennen und die Kraftstoffinjektion rechtzeitig beenden kann, ist er vorteilhafterweise jeweils mit einem Drucksensor 10 in den Brennkammern der Brennkraftmaschine (Figur 1) verbunden.

## Patentansprüche

1. Verfahren zur Unterstützung des Aufheizens eines Katalysators (7), welcher im Abgasweg (8) einer Brennkraftmaschine mit Direkteinspritzung und einer Zündkerze (6) zur Funkenzündung angeordnet ist, wobei eine erste Kraftstoffinjektion (I) vor dem oberen Totpunkt (TDC) des jeweiligen Kolbens und eine zweite Kraftstoffinjektion (II) im Verbrennungstakt (V) nach dem oberen Totpunkt (TDC) dieses Kolbens erfolgt, wobei sich der Kolben in diesem Verbrennungstakt (V) vom oberen Totpunkt (TDC) zum unteren Totpunkt (BDC) zurückbewegt, wobei die zweite Kraftstoffinjektion (II) vor dem Zeitpunkt (Z) der Zündung des Kraftstoffes durch die Zündkerze beginnt,
**dadurch gekennzeichnet, daß**
die zweite Kraftstoffinjektion (II) sich über den Zeitpunkt (Z) der Zündung durch die Zündkerze hinaus erstreckt.

2. Verfahren nach Anspruch 1,
**dadurch gekennzeichnet, daß**
die erste Kraftstoffinjektion (I) im Einlaßtakt (E) erfolgt.

3. Verfahren nach Anspruch 1 oder 2,
**dadurch gekennzeichnet, daß**,
die erste Kraftstoffinjektion (I) zur Bildung eines mageren Luft-Kraftstoff-Gemisches führt.

4. Verfahren nach mindestens einem der Ansprüche 1 bis 3,
**dadurch gekennzeichnet, daß**
die Zündung (Z) des Kraftstoffes zwischen 10° und 40°, vorzugsweise zwischen 25° und 30° nach dem oberen Totpunkt (TDC) erfolgt.

5. Verfahren nach mindestens einem der Ansprüche 1 bis 4,
**dadurch gekennzeichnet, daß**
die zweite Kraftstoffinjektion (II) zwischen 0° und 40°, vorzugsweise zwischen 0° und 25° nach dem oberen Totpunkt (TDC) beginnt.

6. Verfahren nach mindestens einem der Ansprüche 1 bis 5,
**dadurch gekennzeichnet, daß**
das Luft-Kraftstoff-Gemisch im Mittel mager ist.

7. Verfahren nach mindestens einem der Ansprüche 1 bis 6,
**dadurch gekennzeichnet, daß**
die erste Kraftstoffinjektion 50 - 80 % der gesamten Kraftstoffmenge enthält.

8. Brennkraftmaschine, enthaltend
a) mindestens einen Zylinder (2) mit einem Kolben (1), einem Kraftstoffinjektor (4) zur Direktinjektion von Kraftstoff, und einer Zündkerze (6) zur Funkenzündung;
b) einen im Abgasweg (8) angeordneten Katalysator (7);
c) einen Motorregler (5) zur Steuerung der Zündzeitpunkte sowie der Kraftstoffinjektion;
**dadurch gekennzeichnet, daß**
der Motorregler (5) dahingehend ausgebildet ist, ein Verfahren nach mindestens einem der Ansprüche 1 bis 7 auszuführen.

9. Brennkraftmaschine nach Anspruch 8,
**dadurch gekennzeichnet, daß**.
diese mindestens einen Drucksensor (10) zur Messung der Verbrennungsdruckes in einer Brennkammer enthält.

## Claims

1. Method for assisting the heating of a catalytic converter (7) which is arranged in the exhaust-gas path (8) of an internal combustion engine having direct injection and having a spark plug (6) for spark ignition, with a first fuel injection (I) taking place before top dead centre (TDC) of the respective piston and a second fuel injection (II) taking place in the combustion stroke (V) after top dead centre (TDC) of said piston, with the piston moving back from top dead centre (TDC) to bottom dead centre (BDC) in said combustion stroke (V), with the second fuel injection (II) beginning before the time (Z) of the ignition of the fuel by the spark plug,
**characterized in that**
the second fuel injection (II) continues beyond the time (Z) of the ignition by the spark plug.

2. Method according to Claim 1,
**characterized in that**
the first fuel injection (I) takes place in the intake stroke (E).

3. Method according to Claim 1 or 2,
**characterized in that**
the first fuel injection (I) leads to the formation of a lean air/fuel mixture.

4. Method according to at least one of Claims 1 to 3,
**characterized in that**
the ignition (Z) of the fuel takes place between 10° and 40°, preferably between 25° and 30° after top dead centre (TDC).

5. Method according to at least one of Claims 1 to 4,
**characterized in that**
the second fuel injection (II) begins between 0° and 40°, preferably between 0° and 25° after top dead centre (TDC).

6. Method according to at least one of Claims 1 to 5,
**characterized in that**
the air/fuel mixture is, on average, lean.

7. Method according to at least one of Claims 1 to 6,
**characterized in that**
the first fuel injection contains 50 - 80% of the total fuel quantity.

8. Internal combustion engine, comprising
a) at least one cylinder (2) having a piston (1), having a fuel injector (4) for the direct injection of fuel and having a spark plug (6) for spark ignition;
b) a catalytic converter (7) arranged in the exhaust-gas path (8);
c) an engine controller (5) for controlling the ignition times and the fuel injection;
**characterized in that**
the engine controller (5) is designed to carry out a method according to at least one of Claims 1 to 7.

9. Internal combustion engine according to Claim 8,
**characterized in that**
said internal combustion engine comprises at least one pressure sensor (10) for measuring the combustion pressure in a combustion chamber.

## Revendications

1. Procédé d'assistance au chauffage d'un catalyseur (7), qui est disposé dans la trajectoire des gaz d'échappement (8) d'un moteur à combustion interne à injection directe et à bougie d'allumage (6) pour l'allumage par étincelle, une première injection de carburant (I) ayant lieu avant le point mort haut (TDC) du piston respectif et une deuxième injection de carburant (II) ayant lieu dans le temps de combustion (V) après le point mort haut (TDC) de ce piston, le piston revenant dans ce temps de combustion (V) depuis le point mort haut (TDC) jusqu'au point mort bas (BDC), la deuxième injection de carburant (II) commençant avant l'instant (Z) d'allumage du carburant par la bougie d'allumage,
**caractérisé en ce que**
la deuxième injection de carburant (II) s'étend au-delà de l'instant (Z) d'allumage par la bougie d'allumage.

2. Procédé selon la revendication 1,
**caractérisé en ce que**
la première injection de carburant (I) a lieu dans le temps d'admission (E).

3. Procédé selon la revendication 1 ou 2,
**caractérisé en ce que**
la première injection de carburant (I) donne lieu à la formation d'un mélange air/combustible pauvre.

4. Procédé selon au moins l'une quelconque des revendications 1 à 3,
**caractérisé en ce que**
l'allumage (Z) du carburant a lieu entre 10° et 40°, de préférence entre 25° et 30° après le point mort haut (TDC).

5. Procédé selon au moins l'une quelconque des revendications 1 à 4,
**caractérisé en ce que**
la deuxième injection de carburant (II) commence entre 0° et 40°, de préférence entre 0° et 25° après le point mort haut (TDC).

6. Procédé selon au moins l'une quelconque des revendications 1 à 5,
**caractérisé en ce que**
le mélange air/combustible est en moyenne pauvre.

7. Procédé selon au moins l'une quelconque des revendications 1 à 6,
**caractérisé en ce que**
la première injection de carburant contient 50 à 80% de la quantité totale de carburant.

8. Moteur à combustion interne comprenant :
a) au moins un cylindre (2) avec un piston (1), un injecteur de carburant (4) pour l'injection directe de carburant, et une bougie d'allumage (6) pour l'allumage par étincelle ;
b) un catalyseur (7) disposé dans la trajectoire des gaz d'échappement (8) ;
c) un régulateur de moteur (5) pour la commande des instants d'allumage ainsi que de l'injection de carburant ;
**caractérisé en ce que**
le régulateur de moteur (5) est réalisé de manière à mettre en oeuvre un procédé selon au moins l'une quelconque des revendications 1 à 7.

9. Moteur à combustion interne selon la revendication 8,
**caractérisé en ce que**
celui-ci contient au moins un capteur de pression (10) pour mesurer la pression de combustion dans une chambre de combustion.
